# EUROPÄISCHE PATENTANMELDUNG

(11) **EP 2 154 504 A2**
(43) Veröffentlichungstag der Anmeldung: **17.02.2010**
(21) Anmeldenummer: 09167110.7
(22) Anmeldetag: 03.08.2009
(51) Int. Cl.: G01L 1/22

(54) **Kraftmessvorrichtung**

(30) Priorität: 12.08.2008 DE 102008039410
(71) Anmelder: BAG Bizerba Automotive GmbH, 72336 Balingen (DE)
(72) Erfinder: Metzger, Frank, 72461, Albstadt (DE)
(74) Vertreter: Regelmann, Thomas

(57) **Zusammenfassung**

Kraftmessvorrichtung zur Messung der Kraft zwischen einem ersten Element und einem zweiten Element einer Anwendung, umfassend ein Gehäuse und eine Sensoranordnung, welche in dem Gehäuse angeordnet ist, wobei die Sensoranordnung einen ersten Teil und einen zweiten Teil umfasst und die Kraft zwischen dem ersten Element und dem zweiten Element eine relative Position zwischen dem ersten Teil und dem zweiten Teil bestimmt, gekennzeichnet durch mindestens ein Federelement, welches zwischen dem zweiten Element und einem am Gehäuse angeordneten Abstützungsbereich positioniert ist und sich an dem zweiten Element und dem Abstützungsbereich abstützt.

## Beschreibung

Die Erfindung betrifft eine Kraftmessvorrichtung zur Messung der Kraft zwischen einem ersten Element und einem zweiten Element einer Anwendung, umfassend ein Gehäuse und eine Sensoranordnung, welche in dem Gehäuse angeordnet ist, wobei die Sensoranordnung einen ersten Teil und einen zweiten Teil umfasst und die Kraft zwischen dem ersten Element und dem zweiten Element eine relative Position zwischen dem ersten Teil und dem zweiten Teil bestimmt.

Solche Kraftmessvorrichtungen werden beispielsweise im Zusammenhang mit Sitzen wie Fahrzeugsitzen eingesetzt.

Aus der WO 2007/006364 A1 ist eine Kraftmessvorrichtung zur Messung der Kraft zwischen einem ersten Element und einem zweiten Element einer Anwendung bekannt, welche einen Kraftaufnehmer mit einem Biegeelement umfasst. Der Kraftaufnehmer ist an dem ersten Element fixierbar, eine Hülse, welche mit dem Biegeelement über einen Verbindungsbereich verbunden ist und welche den Kraftaufnehmer mindestens teilweise umgibt, ist an dem zweiten Element fixierbar, und ein Anlageelement für das zweite Element ist an der Hülse angeordnet. Das Anlageelement ist ein von der Hülse getrenntes Teil, welches an der Hülse fixiert ist, wobei das Anlageelement mindestens während der Herstellung der Kraftmessvorrichtung in unterschiedlichen Positionen an der Hülse fixierbar ist.

Aus der DE 102 42 251 A1 ist ein Kraftsensor mit einer Kraftmesszelle bekannt, die zwischen zwei Gestellteilen zur Messung der Kräfte zwischen den Gestellteilen angeordnet ist, wobei die Kraftmesszelle ein magnetfeldempfindliches Sensorelement aufweist und ein hohlzylindrisches Biegeelement enthält, das aufgrund der zu erfassenden Krafteinwirkung eine Beeinflussung des magnetischen Feldes im Bereich des magnetfeldempfindlichen Sensorelements der Kraftmesszelle bewirkt, wobei das hohlzylindrische Biegeelement einen am relativ ortsfesten Ende an einem Gestellteil befestigten Stab mit einem Magneten an seinem freien Ende enthält. Das magnetfeldempfindliche Sensorelement ist durch die Kraft im Feld des Magneten auslenkbar. Das an einem Gestellteil gehaltene Biegeelement ragt durch einen am anderen Gestellteil gehaltenen Topf hinein, wobei der Topf im Bereich der Halterung am anderen Gestellteil einen sich radial erstreckenden Innenbund aufweist, der radial eine im Inneren des Topfes befindliche Durchmessererweiterung des Biegeelements überlappt.

Der Erfindung liegt die Aufgabe zugrunde, die eingangs genannte Kraftmessvorrichtung so zu verbessern, dass sie auf einfache Weise herstellbar und universell einsetzbar ist.

Diese Aufgabe wird bei der eingangs genannten Kraftmessvorrichtung erfindungsgemäß dadurch gelöst, dass mindestens ein Federelement vorgesehen ist, welches zwischen dem zweiten Element und einem am Gehäuse angeordneten Abstützungsbereich positioniert ist und sich an dem zweiten Element und dem Abstützungsbereich abstützt.

Das Federelement bildet ein elastisches Distanzstück zwischen dem zweiten Element und dem Abstützungsbereich. Bei unterschiedlichen Anwendungen kann das zweite Element unterschiedliche Abmessungen aufweisen bzw. bei der gleichen Anwendung können Fertigungstoleranzen vorliegen. Ferner können auch je nach Anwendung unterschiedliche Abstände des ersten Elements und des zweiten Elements vorliegen. Beispielsweise weisen Fahrzeugsitze unterschiedlicher Hersteller an Bauteilen, an welchen eine Kraftmessvorrichtung zu positionieren ist, unterschiedliche Abmessungen auf. Durch das Vorsehen des mindestens einen Federelements lassen sich solche unterschiedlichen Abmessungen und Abstände bzw. Toleranzen in den Abmessungen und Abständen ausgleichen. Das Federelement ist über seine elastische Ausbildung in seinen Abmessungen variierbar und dabei insbesondere komprimierbar.

Durch das Vorsehen des mindestens einen Federelements lässt sich ein optimierter Kraftschluss zwischen dem zweiten Element und dem Gehäuse auch unter Erreichen eines Toleranzausgleichs erhalten. Insbesondere wird durch das Vorsehen des mindestens einen Federelements eine Pressung der Kraftmessvorrichtung nicht negativ beeinflusst.

Günstigerweise ist das mindestens eine Federelement als Ring ausgebildet, welcher einen Gehäusebereich umgibt. Dadurch lässt sich auf einfache Weise eine gleichmäßige Flächenpressung erreichen und das Federelement lässt sich auch verliersicher halten.

Günstigerweise ist der Gehäusebereich mindestens teilweise ein Eintauchbereich in eine Öffnung des zweiten Elements. Dadurch lässt sich auf einfache Weise ein entsprechender Toleranzausgleich erhalten.

Es ist ferner günstig, wenn der Abstützungsbereich an einer Außenseite des Gehäuses angeordnet ist. Dadurch kann sich das mindestens eine Federelement auf einfache Weise an dem Gehäuse abstützen.

Insbesondere ist der Abstützungsbereich an einer Mantelseite des Gehäuses angeordnet, so dass das mindestens eine Federelement beispielsweise das Gehäuse umgebend angeordnet sein kann.

Entsprechend ist es vorteilhaft, wenn der Abstützungsbereich das Gehäuse umgebend angeordnet ist. Dadurch lässt sich auch eine gleichmäßige Krafteinleitung bezüglich der Abstützung erhalten.

Ferner günstig ist es, wenn der Abstützungsbereich eine Anlagefläche aufweist, welche quer zu einer Kraftrichtung des mindestens einen Federelements orientiert ist. Dadurch ergibt sich eine optimierte Abstützung.

Bei einem Ausführungsbeispiel weist das mindestens eine Federelement eine ebene Seite zur Anlage an dem Abstützungsbereich oder dem zweiten Element auf. Dadurch erhält man eine gleichmäßige Flächenpressung, so dass die Kraftmessung durch das mindestens eine Federelement minimal beeinflusst wird.

Ganz besonders vorteilhaft ist es, wenn das mindestens eine Federelement eine Mehrzahl von elastischen Fingern aufweist, welche an einem Träger angeordnet sind. Über die elastischen Finger ist das Federelement elastisch ausgebildet, d. h. die Finger stellen die Federn bereit. Dadurch kann das Federelement als Distanzelement auf einfache Weise elastisch ausgebildet werden.

Die elastischen Finger sind dadurch gebildet, dass sie an elastischen Trägern angeordnet sind und/oder elastisch ausgebildet sind. Die Finger sind elastisch bezüglich des Trägers beweglich.

Die Finger weisen eine Anlagefläche für das zweite Element oder den Abstützungsbereich auf, so dass sie sich entsprechend an dem zweiten Element oder dem Abstützungsbereich (entsprechend der Anordnung des mindestens einen Federelements) abstützen können.

Günstig ist es, wenn der Träger ringförmig ausgebildet ist. Dadurch kann er beispielsweise auf den entsprechenden Gehäusebereich aufgeschoben werden.

Es ist ferner günstig, wenn der Träger eine erste Anlagefläche für den Abstützungsbereich oder das zweite Element aufweist, wobei diese erste Anlagefläche vorzugsweise eine ebene Anlagefläche ist.

Weiterhin kann es vorgesehen sein, dass der Träger eine der ersten Anlagefläche gegenüberliegende zweite Anlagefläche für das zweite Element oder den Abstützungsbereich aufweist. Die zweite Anlagefläche wird dann wirksam, wenn die Finger in eine äußere Position bei maximal zulässiger Kraftbelastung bewegt sind.

Insbesondere sind die Finger ringsegmentförmig ausgebildet, wobei sie vorzugsweise außerhalb eines Verbindungsbereichs mit dem Träger radial und in Umfangsrichtung von dem Träger getrennt sind, um eine elastische Beweglichkeit zu ermöglichen.

Vorzugsweise sind die Finger zwischen einer ersten Position, in welcher das mindestens eine Federelement eine maximale Höhe aufweist, und mindestens einer zweiten Position, in welcher das mindestens eine Federelement eine minimale Höhe aufweist, elastisch beweglich. Dieser Bewegungsbereich definiert den Bereich des möglichen Toleranzausgleichs über das mindestens eine Federelement.

Beispielsweise liegt der Abstand zwischen der maximalen Höhe und der minimalen Höhe im Bereich zwischen 6 mm und 0,5 mm.

Es hat sich für Anwendungen insbesondere bei Fahrzeugsitzen als günstig erwiesen, wenn das mindestens eine Federelement eine Federkonstante im Bereich zwischen 0,1 x 10⁵ N/m und 20 x 10⁵ N/m aufweist.

Es ist vorteilhaft, wenn das mindestens eine Federelement aus einem Kunststoffmaterial hergestellt ist. Dadurch ergibt sich eine optimierte Einsetzbarkeit.

Es ist ferner günstig, wenn das zweite Element an einer Seite, welche derjenigen Seite abgewandt ist, an welcher das mindestens eine Federelement abgestützt ist, sich an dem ersten Element abstützt. Das erste Element stellt dann die Anlagefläche für das zweite Element bereit. Das zweite Element ist dann gewissermaßen zwischen dem ersten Element und dem Abstützungsbereich eingespannt, wobei das mindestens eine Federelement die entsprechende Spannkraft bereitstellt.

Es kann ein Biegeelement vorgesehen sein, an welchem der zweite Teil der Sensoranordnung fixiert ist. Beispielsweise lassen sich Kräfte von dem zweiten Element in das Biegeelement einleiten, wobei die Krafteinleitung eine Positionsänderung des zweiten Teils in Abhängigkeit der Größe der eingeleiteten Kraft relativ zu dem ersten Teil bewirkt.

Erfindungsgemäß wird eine Kraftmessanordnung bereitgestellt, welche ein erstes Element, ein zweites Element, wobei zwischen dem ersten Element und dem zweiten Element Kräfte wirken können, und eine erfindungsgemäße Kraftmessvorrichtung umfasst.

Entsprechend kann die Kraftmessanordnung an einer Sitzanordnung realisiert sein.

Die erfindungsgemäß Kraftmessvorrichtung lässt sich vorteilhafterweise zur Kraftbestimmung an einem Sitz und insbesondere Fahrzeugsitz verwenden.

Die nachfolgende Beschreibung bevorzugter Ausführungsformen dient im Zusammenhang mit den Zeichnungen der näheren Erläuterung der Erfindung. Es zeigen:
- Figur 1: eine schematische perspektivische Darstellung eines Ausführungsbeispiels einer erfindungsgemäßen Kraftmessvorrichtung, welche an einer Anwendung montiert ist;
- Figur 2: eine Seitenansicht der Kraftmessvorrichtung gemäß Figur 1;
- Figur 3(a): eine Draufsicht auf ein Federelement der Kraftmessvorrichtung gemäß Figur 1;
- Figur 3(b): eine Schnittansicht längs der Linie 3(b)-3(b) in der Figur 3(a);
- Figur 3(c): eine Seitenansicht des Federelements gemäß Figur 3(a) in der Richtung A;
- Figur 4: eine Schnittansicht der Kraftmessvorrichtung gemäß Figur 1 in einer ersten Schnittebene;
- Figur 5: eine Schnittansicht der Kraftmessvorrichtung gemäß Figur 1 in einer zweiten Schnittebene; und
- Figur 6: schematisch ein Kraft-Auslenkungs-Diagramm für das Federelement gemäß Figur 3(a).

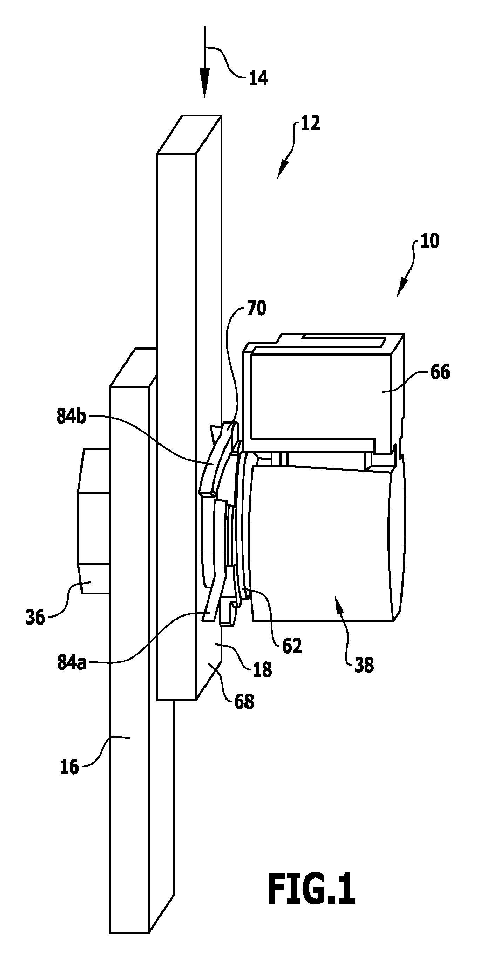

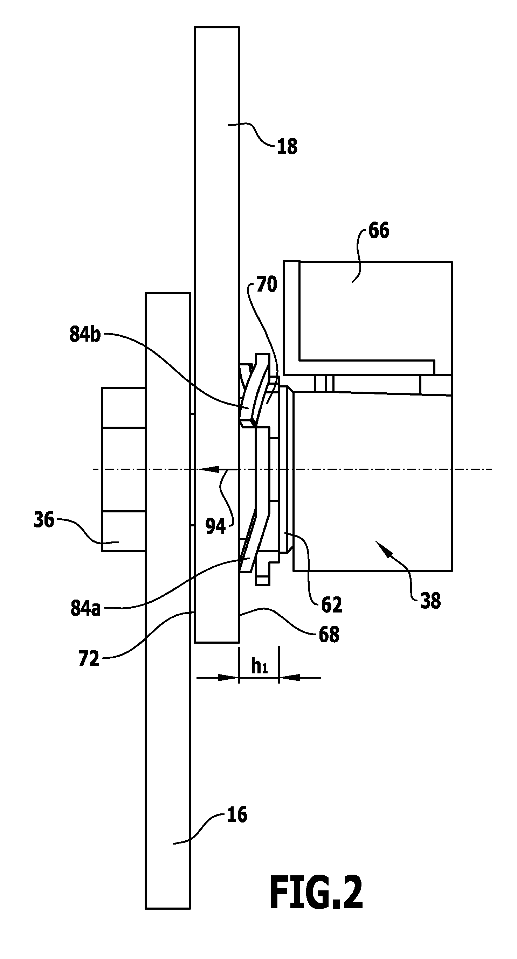

Ein Ausführungsbeispiel einer erfindungsgemäßen Kraftmessvorrichtung, welche in den Figuren 1, 2, 4 und 5 gezeigt und dort mit 10 bezeichnet ist, ist als Kraftmesszelle ausgebildet. Die Kraftmessvorrichtung 10 ist Teil einer Kraftmessanordnung 12, welche zur Messung einer Kraft 14 zwischen einem ersten Element 16 und einem zweiten Element 18 einer Anwendung dient. Bei der Anwendung handelt es sich beispielsweise um einen Sitz und insbesondere um einen Fahrzeugsitz. Das erste Element 16 und das zweite Element 18 sind dann Gestellelemente des Sitzes. Die Kraft 14 ist insbesondere eine Gewichtskraft, die auf den Sitz ausgeübt wird.

Das erste Element 16 ist insbesondere ein Gestellelement, welches mit einer Fahrzeugkarosserie direkt oder indirekt verbunden ist. Beispielsweise ist das erste Element 16 eine Anbindung an eine Sitzschiene. Das zweite Element 18 ist mit einem Sitzbereich des Fahrzeugsitzes verbunden. Beispielsweise ist das zweite Element 18 eine Schwinge eines Sitzverstellers. Zwischen dem ersten Element 16 und dem zweiten Element 18 können weitere Elemente wie beispielsweise Sitzschienen angeordnet sein.

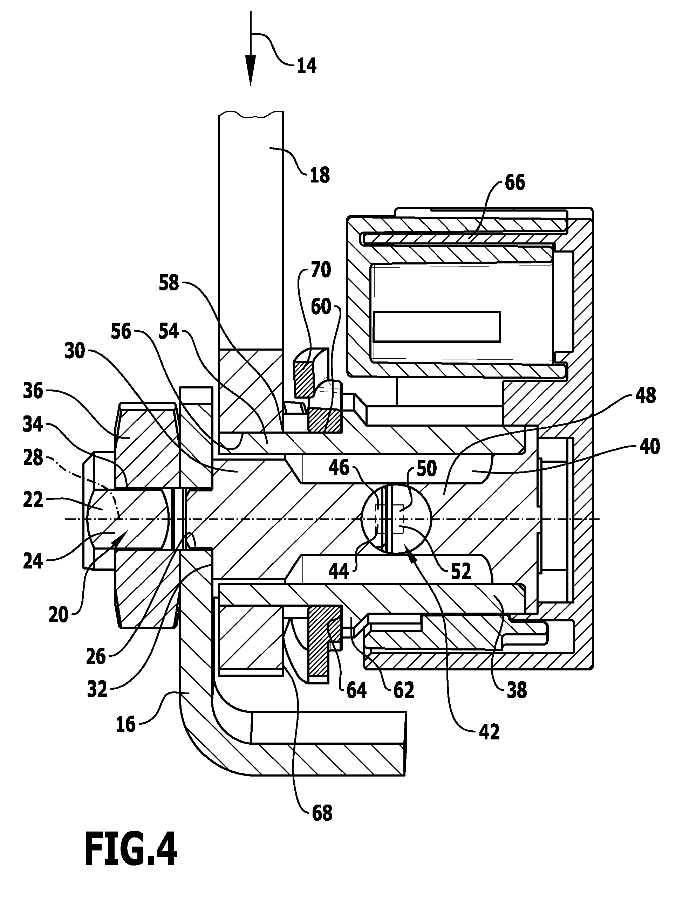

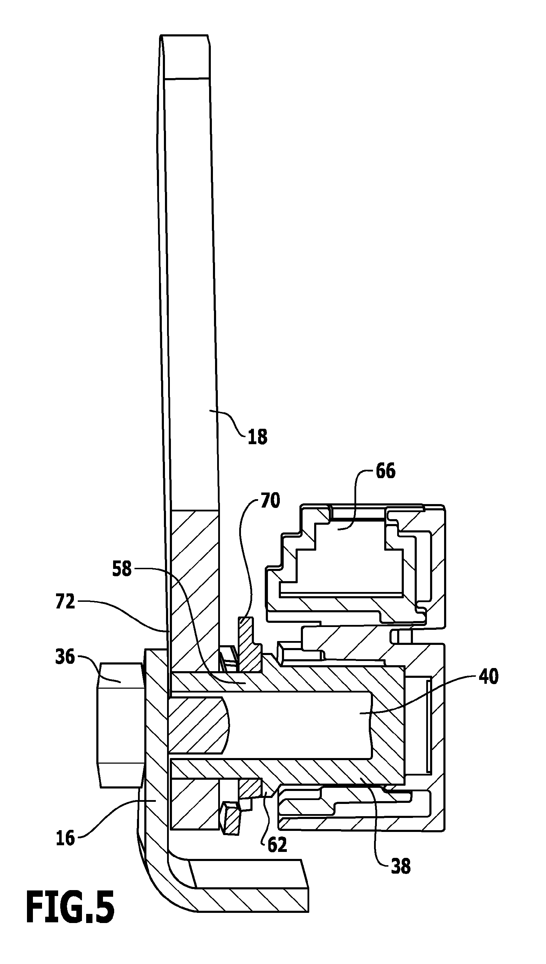

Die Kraftmessvorrichtung 10 umfasst einen Kraftaufnehmer 20 (Figuren 4 und 5). Der Kraftaufnehmer 20 ist zur Fixierung an dem ersten Element 16 vorgesehen. Der Kraftaufnehmer 20 wiederum umfasst ein Montageteil 22 mit einem zylindrischen Bereich 24. Der zylindrische Bereich 24 ist von einer dem zweiten Element 18 zugewandten Seite her in eine Öffnung 26 des ersten Elements 16 einschiebbar und durch diese Öffnung 26 durchtauchbar.

Die Öffnung 26 kann rotationssymmetrisch ausgebildet sein. Es ist auch möglich, dass sie nicht rotationssymmetrisch ausgebildet ist und der Bereich 24 an die entsprechende Form der Öffnung 26 angepasst ist und dabei nicht zylindrisch ist. Dadurch lässt sich eine Verdrehsicherung für das Montageteil 22 in der Öffnung 26 bereitstellen.

Dem zylindrischen Bereich 24 nächstliegend weist das Montageteil 22 einen ringförmigen Flansch 30 auf. Dieser ringförmige Flansch 30 hat einen größeren Durchmesser als der zylindrische Bereich 24 und einen größeren Durchmesser als die Öffnung 26. Das erste Element 16 ist an eine Anlagefläche 32, welche ringförmig ist und eine Normalenrichtung parallel zur Richtung 28 aufweist, anlegbar, d. h. der Flansch 30 dient als Anlageflansch.

An dem zylindrischen Bereich 24 ist ein Außengewinde 34 gebildet. Auf das Außengewinde ist zur Fixierung der Kraftmessvorrichtung 10 an dem ersten Element 16 eine Mutter 36 aufgeschraubt, durch welche eine Druckkraft ausübbar ist, welche das erste Element 16 gegen die Anlagefläche 32 des Flansches 30 drückt; dadurch lässt sich das erste Element 16 zwischen der Mutter 36 und dem Flansch 30 einspannen.

Die Kraftmessvorrichtung 10 umfasst ein Gehäuse 38. Das Gehäuse 38 weist einen Innenraum 40 auf, in welchem eine Sensoranordnung 42 positioniert ist.

Die Sensoranordnung umfasst einen ersten Teil 44, welcher fest mit dem Montageteil 22 verbunden ist. Dadurch ist der erste Teil 44 der Sensoranordnung 42 auch an das erste Element 16 gekoppelt.

Der erste Teil 44 der Sensoranordnung 42 umfasst eine Gebereinrichtung 46 wie eine Magneteinrichtung mit einem oder mehreren Permanentmagneten.

An dem Montageteil 22 ist ein Biegeelement 48 angeordnet. Dieses Biegeelement 48 ist beispielsweise hohlzylindrisch ausgebildet und weist beispielsweise die Form eines Hohlstabs auf, welcher mindestens näherungsweise die Form eines Hohlzylinders hat. Der Kraftaufnehmer 20 ist über das Biegeelement 48 elastisch verformbar. Dadurch kann der Kraftaufnehmer 20 Kräfte 14 wie beispielsweise Gewichtskräfte aufnehmen. Das Biegeelement 48 umgibt beabstandet zu diesem das erste Teil 44 der Sensoranordnung 42.

Das Biegeelement 48 weist beispielsweise Schwächungszonen auf.

Das Biegeelement 48 ist mit einem zweiten Teil 50 der Sensoranordnung 42 verbunden. Der zweite Teil 50 der Sensoranordnung 42 umfasst eine Sensoreinrichtung mit einem oder mehreren Sensoren wie beispielsweise Hall-Sensoren.

Über das Biegeelement 48 ist der zweite Teil 50 der Sensoranordnung 42 gegenüber dem ersten Teil 44 beweglich und über die relative Position des zweiten Teils 50 zu dem ersten Teil 44 lässt sich durch entsprechende Auswertung dieser Position die Größe der eingeleiteten Kraft 14 bestimmen.

Bei der oben beschriebenen Ausführungsform ist die Gebereinrichtung 46 an dem ersten Teil 44 angeordnet und die Sensoreinrichtung 52 ist an dem zweiten Teil 50 der Sensoranordnung 42 angeordnet. Die Gebereinrichtung kann dabei auch an dem zweiten Teil 50 angeordnet sein und die entsprechende Sensoreinrichtung dann an dem ersten Teil 44.

Das Gehäuse 38 ist als Krafteinleitungseinrichtung 54 ausgebildet, über welche eine Kraft in das Biegeelement 48 einleitbar ist.

Das zweite Element 18 weist eine Öffnung 56 auf, durch welche das Gehäuse 38 mit einem Gehäusebereich 58 durchgetaucht ist. In diesem Sinne ist der Gehäusebereich 58 ein Eintauchbereich. Bei Einwirkung einer Kraft 14 auf das zweite Element 18 wird diese Kraft auf den Gehäusebereich 58 des Gehäuses 38 übertragen und aufgrund der Wirkung als Krafteinleitungseinrichtung 54 wirkt diese Kraft auf das Biegeelement 48, wodurch wiederum eine Auslenkung des zweiten Teils 50 zu dem ersten Teil 44 erfolgt. Diese Auslenkung ist über die Sensoranordnung 42 detektierbar und dadurch ist die eingeleitete Kraft 14 quantitativ bestimmbar.

An einer Mantel-Außenseite 60 des Gehäuses 38, welche beispielsweise ein Zylindermantel ist, ist ein Abstützungsbereich 62 angeordnet. Der Gehäusebereich 58 ist dabei zwischen dem Abstützungsbereich 62 und einem Ende des Gehäuses 38 angeordnet. Der Abstützungsbereich 62 umgibt das Gehäuse 38 ringförmig und ist beispielsweise einstückig an dem Gehäuse 38 gebildet. Durch den Abstützungsbereich 62 ist eine beispielsweise ringförmige Anlagefläche 64 bereitgestellt, welche dem zweiten Element 18 zugewandt ist. Diese Anlagefläche 64 umgibt das Gehäuse 38. Sie weist eine Normalenrichtung auf, welche mindestens näherungsweise parallel zu der Richtung 28 orientiert ist.

An der Außenseite 60 des Gehäuses 38 sitzt weiterhin eine Steckereinrichtung 66, an die ein externer Stecker anschließbar ist. Über diesen Stecker lässt sich die Sensoranordnung 42 mit elektrischer Energie versorgen. Ferner lassen sich Signale der Sensoranordnung 42 abführen.

Bei der gezeigten Ausführungsform sitzt die Steckereinrichtung 66 neben dem Gehäuse 38 in einer Richtung quer zur Richtung 28. Dadurch lässt sich die Länge der Kraftmessvorrichtung 10 in der Richtung 28 gering halten.

Zwischen einer Seite 68 des zweiten Elements 18, welche der Anlagefläche 64 des Abstützungsbereichs 62 zugewandt ist, und dem Abstützungsbereich 62 sitzt ein Federelement 70, welches elastisch ist. Eine Federkraft wirkt mindestens näherungsweise parallel zur Richtung 28.

Eine der Seite 68 gegenüberliegende Seite 72 des zweiten Elements 18 ist dem ersten Element 16 zugewandt. Das zweite Element 18 stützt sich über diese Seite 72 an dem ersten Element 16 ab. (Aufgrund des speziellen Schnitts ist dies in Figur 4 nicht sichtbar, da dort ein Bereich gezeigt ist, welcher sich nicht an dem ersten Element 16 abstützt. In Figur 5 ist diese Abstützung gezeigt.)

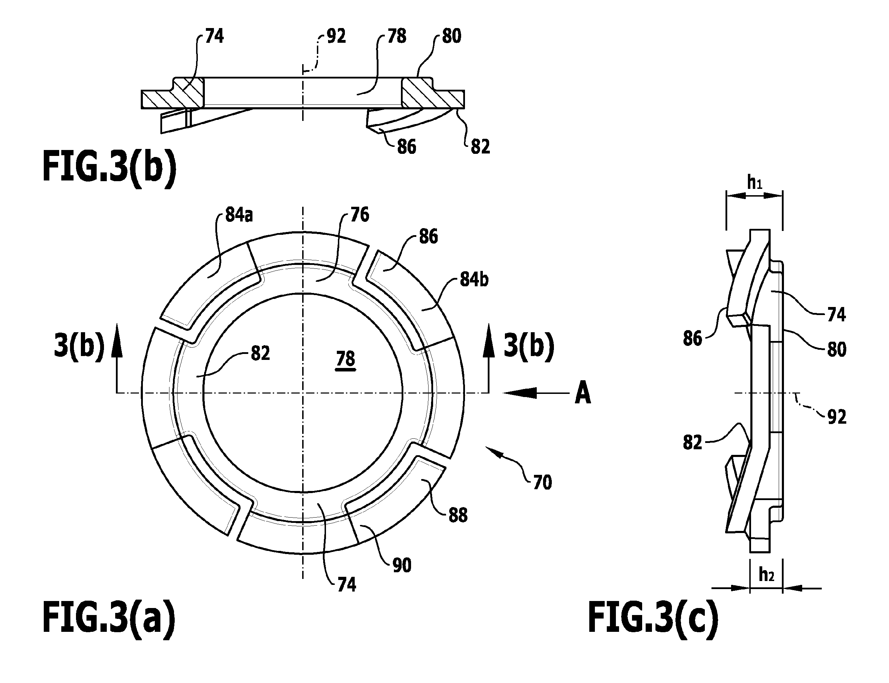

Das Federelement 70 ist als Ringelement ausgebildet (Figuren 3(a) bis 3(c)) mit einem Träger 74, welcher ringförmig ausgebildet ist mit einem Ringbereich 76 und eine Öffnung 78 umgibt, wobei diese Öffnung 78 insbesondere kreisförmig ist. Der Träger 74 weist eine erste Anlagefläche 80 auf, welche insbesondere eben ausgebildet ist. Über diese erste Anlagefläche 80 stützt sich das Federelement 70 an der Anlagefläche 64 des Abstützungsbereichs 62 ab. Der ersten Anlagefläche 80 gegenüberliegend weist der Träger eine vorzugsweise ebenfalls ebene zweite Anlagefläche 82 auf. An dieser zweiten Anlagefläche 82 stützt sich das zweite Element 18 ab, wenn das Federelement 70 vollständig elastisch komprimiert ist und dabei eine minimale Höhe h₂ (Figur 3(c)) aufweist.

An dem Träger 74 sind mehrere Finger 84a, 84b usw. elastisch angeordnet. Die Finger ragen, wenn auf sie keine Kraft ausgeübt wird, über die zweite Anlagefläche 82 des Trägers 74 hinaus. Sie stellen Anlageflächen 86 für die Seite 68 des zweiten Elements 18 bereit, über welche sich das Federelement 70 an dem zweiten Element 18 abstützt, wenn die minimale Höhe h₂ nicht erreicht ist.

Die Finger 84a, 84b usw. sind vorzugsweise gleichmäßig um den Umfang des Ringbereichs 76 verteilt angeordnet. Bei dem gezeigten Ausführungsbeispiel sind an dem Träger 74 vier Finger angeordnet.

Die Finger 84a, 84b usw. haben die Form eines Ringsegments 88. Sie weisen einen Verbindungsbereich 90 mit dem Träger 74 auf. Außerhalb des Verbindungsbereichs 90 sind sie radial und in Umfangsrichtung von dem Träger 74 getrennt, um eine entsprechende elastische Beweglichkeit in einer Richtung 92 zu ermöglichen. Eine entsprechende Achse für die Richtung 92 geht dabei durch einen Mittelpunkt der Öffnung 78.

Wenn keine Kraft auf das Federelement 70 ausgeübt wird, dann weist dieses eine Höhe h₁ auf. Durch Kraftausübung werden die Finger 84a, 84b in Richtung des Trägers 74 elastisch bewegt, bis sie an oder hinter die zweite Anlagefläche 82 verschoben werden. Eine entsprechende Anlagefläche an das Federelement 70 ist dann durch die zweite Anlagefläche 82 bereitgestellt.

Die elastische Beweglichkeit der Finger 84a, 84b usw. an dem Träger 74 ist dadurch bereitgestellt, dass die Finger 84a, 84b in sich elastisch ausgebildet sind und/oder elastisch über den Verbindungsbereich 90 mit dem Träger 74 verbunden sind.

Das Federelement 70 sitzt an dem Gehäusebereich 58 über dem Gehäuse 38. Das Gehäuse ist durch die Öffnung 78 des Ringbereichs 76 durchgetaucht. Bei montierter Kraftmessvorrichtung 10 stützt sich das Federelement 70 mit der ersten Anlagefläche 80 an dem Abstützungsbereich 62 am Gehäuse 38 ab. Die Anlageflächen 86 der Finger 84a, 84b usw. liegen an der Seite 68 des zweiten Elements 18 an, so dass das Federelement 70 über die Anlageflächen 86 an dem zweiten Element 18 abgestützt ist. (Das Federelement 70 kann auch umgedreht montiert sein, wobei sich dann die erste Anlagefläche 80 an dem zweiten Element 18 abstützt.)

Durch die elastische Ausbildung des Federelements 70 ist bei der Montage die Position des zweiten Elements 18 an dem Gehäuse 38 variierbar. Bei unterschiedlichen Anwendungen kann das zweite Element 18 unterschiedliche Abmessungen aufweisen. Es können je nach Anwendung unterschiedliche Abstände des ersten Elements 16 und des zweiten Elements 18 vorliegen. Beispielsweise weisen Fahrzeugsitze unterschiedlicher Hersteller an Bauteilen, an welchen eine Kraftmessvorrichtung zu positionieren ist, unterschiedliche Abmessungen auf. Durch das Federelement 70 können diese unterschiedlichen Abmessungen einschließlich Fertigungstoleranzen in gewissem Maße ausgeglichen werden. Dadurch kann ein Typ von Kraftmessvorrichtung für verschiedene Anwendungen oder die gleiche Anwendung mit unterschiedlichen Abmessungen und/oder unterschiedlichen Abständen eingesetzt werden.

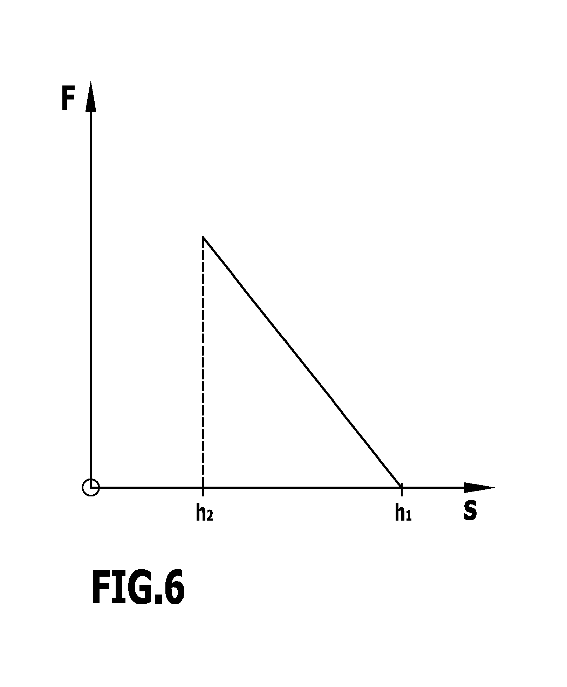

Das Federelement 70 ist aus einem Kunststoffmaterial hergestellt. In Figur 6 ist schematisch ein Kraft(F)-Weg(s)-Diagramm für ein erfindungsgemäßes Federelement 70 angedeutet. Der Weg ist dabei ein Kompressionsweg ausgehend von einer maximalen Höhe h₁. Bei positioniertem Federelement 70 ist dabei die Richtung 92 mindestens näherungsweise koaxial zur Richtung 28. Das Federelement 70 lässt sich elastisch bis zur Höhe h₂ komprimieren. Der Einsatzbereich für die Auslenkung liegt im Wesentlichen zwischen h₁ und h₂. Solche Variationen bzw. Toleranzen lassen sich über das Federelement 70 ausgleichen.

Die Differenz zwischen der Höhe h₁ und h₂ liegt insbesondere in der Größenordnung zwischen 6 mm und 0,5 mm. Bei einem konkreten Ausführungsbeispiel liegt h₁ bei 4,5 mm und h₂ bei 2,5 mm.

Typische Werte für die Federkonstante liegen in einem Bereich zwischen 0,1 x 10⁵ N/m und 20 x 10⁵ N/m.

Das Federelement 70 ist ein flexibler Distanzring (Flexring). Das Federelement 70 ist über die Finger 84a, 84b usw. einseitig offen. Es wird dabei ein Kraftschluss erreicht, wobei ein Toleranzausgleich möglich ist. Die Pressung der Kraftmessvorrichtung 10 an das zweite Element 18 (und das erste Element 16) wird dabei im Wesentlichen nicht beeinflusst.

Vorzugsweise ist das Federelement so eingestellt, dass über den ganzen (Kompressions-)Weg eine mindestens näherungsweise konstante Kraft vorliegt, d. h. eine lineare Abhängigkeit vorliegt.

Die erfindungsgemäße Kraftmessvorrichtung 10 funktioniert wie folgt:
Bei der Montage der Kraftmessvorrichtung 10 wird (bei gelöster Mutter 36) das Montageteil 22 mit seinem zylindrischen Bereich 24 in die Öffnung 26 des ersten Elements 16 gesteckt. Auf dem Gehäuse 38 ist dabei das Federelement 70 angeordnet. Dabei wird auch das Gehäuse mit seinem Gehäusebereich 58 durch die Öffnung 56 des zweiten Elements 18 gesteckt.

Die Mutter 36 wird auf den zylindrischen Bereich 24 aufgesetzt und angezogen. Das erste Element 16 wirkt dabei in Richtung 28 auf das zweite Element 18, bis es an dem Flansch 30 anschlägt. In der Regel liegt dann das zweite Element 18 direkt an dem ersten Element 16 an. Es kann durch Toleranzen in der Anwendung (beispielsweise in einer Sitzkonstruktion) aber auch das erste Element 16 zu dem zweiten Element 18 in einem kleinen spitzen Winkel orientiert sein und entsprechend anliegen. Abhängig von der wirkenden Kraft wird das Federelement 70 zwischen dem zweiten Element 18 und dem Abstützungsbereich 62 komprimiert.

Dadurch lässt sich ein Toleranzausgleich bei der Montage der Kraftmessvorrichtung 10 an einer Kraftmessanordnung erreichen. Es wird ein optimierter Kraftschluss zwischen dem zweiten Element 18, dem ersten Element 16 und der Kraftmessvorrichtung 10 erreicht, wobei die Änderung der Pressung der Kraftmessvorrichtung 10 minimiert ist.

Eine Kraftrichtung 94 der elastischen Kraft des Federelements 70, mit welchem diese auf das zweite Element 18 wirkt, ist dabei mindestens näherungsweise parallel zur Richtung 28.

Durch die erfindungsgemäße Lösung lassen sich auf einfache Weise Toleranzen bei der Montage der Kraftmessvorrichtung 10 wie beispielsweise an einer Sitzanwendung ausgleichen.

Grundsätzlich kann die Sensoranordnung 42 auf unterschiedliche Arten und Weisen ausgebildet sein. Auch die Krafteinleitung kann auf unterschiedliche Arten und Weisen erfolgen.

Beim Einsatz der Kraftmessvorrichtung 10 erfolgt, wenn eine Kraft 14 ausgeübt wird, eine relative Verschiebung zwischen dem ersten Teil 44 und dem zweiten Teil 50 der Sensoranordnung 42. Die entsprechende relative Position des ersten Teils 44 zu dem zweiten Teil 50 ist erfassbar und durch entsprechende Auswertung kann dadurch die Größe der Kraft 14 quantitativ bestimmt werden.

## Patentansprüche

1. Kraftmessvorrichtung zur Messung der Kraft (14) zwischen einem ersten Element (16) und einem zweiten Element (18) einer Anwendung, umfassend ein Gehäuse (38) und eine Sensoranordnung (42), welche in dem Gehäuse (38) angeordnet ist, wobei die Sensoranordnung (42) einen ersten Teil (44) und einen zweiten Teil (50) umfasst und die Kraft (14) zwischen dem ersten Element (16) und dem zweiten Element (18) eine relative Position zwischen dem ersten Teil (44) und dem zweiten Teil (50) bestimmt,
**gekennzeichnet durch** mindestens ein Federelement (70), welches zwischen dem zweiten Element (18) und einem am Gehäuse (38) angeordneten Abstützungsbereich (62) positioniert ist und sich an dem zweiten Element (18) und dem Abstützungsbereich (62) abstützt.

2. Kraftmessvorrichtung nach Anspruch 1, **dadurch gekennzeichnet, dass** das mindestens eine Federelement (70) als Ring ausgebildet ist, welcher einen Gehäusebereich (58) umgibt, und insbesondere dass der Gehäusebereich (58) mindestens teilweise ein Eintauchbereich in eine Öffnung (56) des zweiten Elements (18) ist.

3. Kraftmessvorrichtung nach einem der vorangehenden Ansprüche, **dadurch gekennzeichnet, dass** der Abstützungsbereich (62) an einer Außenseite (60) des Gehäuses (38) angeordnet ist und insbesondere dass der Abstützungsbereich (62) an einer Mantelseite des Gehäuses (38) angeordnet ist.

4. Kraftmessvorrichtung nach einem der vorangehenden Ansprüche, **dadurch gekennzeichnet, dass** der Abstützungsbereich (62) das Gehäuse (38) umgebend angeordnet ist.

5. Kraftmessvorrichtung nach einem der vorangehenden Ansprüche, **dadurch gekennzeichnet, dass** der Abstützungsbereich (62) eine Anlagefläche (64) aufweist, welche quer zu einer Kraftrichtung (94) des mindestens einen Federelements (70) orientiert ist.

6. Kraftmessvorrichtung nach einem der vorangehenden Ansprüche, **dadurch gekennzeichnet, dass** das mindestens eine Federelement (70) eine ebene Seite zur Anlage an dem Abstützungsbereich (62) oder dem zweiten Element (18) aufweist.

7. Kraftmessvorrichtung nach einem der vorangehenden Ansprüche, **dadurch gekennzeichnet, dass** das mindestens eine Federelement (70) eine Mehrzahl von elastischen Fingern (84a, 84b) aufweist, welche an einem Träger (74) angeordnet sind, und insbesondere dass die Finger (84a, 84b) elastisch an dem Träger (74) angeordnet sind und/oder elastisch ausgebildet sind, und insbesondere dass die Finger (84a, 84b) eine Anlagefläche (86) für das zweite Element (18) oder den Abstützungsbereich (62) aufweisen, und insbesondere dass der Träger (74) ringförmig ausgebildet ist, und insbesondere dass der Träger (74) eine erste Anlagefläche (80) für den Abstützungsbereich (62) oder das zweite Element (18) aufweist, und insbesondere dass der Träger (74) eine der ersten Anlagefläche (80) gegenüberliegende zweite Anlagefläche (82) für das zweite Element (18) oder den Abstützungsbereich (62) aufweist, und insbesondere dass die Finger (84a, 84b) ringsegmentförmig ausgebildet sind, und insbesondere dass die Finger (84a, 84b) zwischen einer ersten Position, in welcher das mindestens eine Federelement (70) eine maximale Höhe (h₁) aufweist, und mindestens einer zweiten Position, in welcher das mindestens eine Federelement (70) eine minimale Höhe (h₂) aufweist, elastisch beweglich sind.

8. Kraftmessvorrichtung nach Anspruch 7, **dadurch gekennzeichnet, dass** der Abstand zwischen der maximalen Höhe (h₁) und der minimalen Höhe (h₂) im Bereich zwischen 6 mm und 0,5 mm liegt.

9. Kraftmessvorrichtung nach einem der vorangehenden Ansprüche, **dadurch gekennzeichnet, dass** das mindestens eine Federelement eine Federkonstante im Bereich zwischen 0,1 x 10⁵ N/m und 20 x 10⁵ N/m aufweist.

10. Kraftmessvorrichtung nach einem der vorangehenden Ansprüche, **dadurch gekennzeichnet, dass** das mindestens eine Federelement (70) aus einem Kunststoffmaterial hergestellt ist.

11. Kraftmessvorrichtung nach einem der vorangehenden Ansprüche, **dadurch gekennzeichnet, dass** das zweite Element (18) an einer Seite (72), welche derjenigen Seite (68) abgewandt ist, an welcher das mindestens eine Federelement (70) abgestützt ist, sich an dem ersten Element (16) abstützt.

12. Kraftmessvorrichtung nach einem der vorangehenden Ansprüche, **gekennzeichnet durch** ein Biegeelement (48), an welchem der zweite Teil (50) der Sensoranordnung (42) fixiert ist.

13. Kraftmessanordnung, umfassend ein erstes Element (16), ein zweites Element (18), zwischen welchen Kräfte (14) wirken können, und eine Kraftmessvorrichtung (10) gemäß einem der vorangehenden Ansprüche.

14. Sitzanordnung, umfassend ein erstes Element (16), ein zweites Element (18) und eine Kraftmessvorrichtung gemäß einem der Ansprüche 1 bis 12.

15. Verwendung der Kraftmessvorrichtung gemäß einem der Ansprüche 1 bis 12 zur Kraftbestimmung an einem Sitz.
